# EUROPÄISCHE PATENTSCHRIFT

(11) **EP 3 659 325 B1**
(45) Veröffentlichungstag und Bekanntmachung des Hinweises auf die Patenterteilung: **02.09.2026**
(21) Anmeldenummer: 18746669.3
(22) Anmeldetag: 25.07.2018
(51) Int. Cl.: H04L 12/40, H04L 41/0813, H04L 61/5038

(54) **DRAHTLOSE VERGABE VON NETZWERKADRESSEN**
WIRELESS ALLOCATION OF NETWORK ADDRESSES
ATTRIBUTION SANS FIL D'ADRESSES DE RÉSEAU

(30) Priorität: 28.07.2017 DE 102017117128
(43) Veröffentlichungstag der Anmeldung: 03.06.2020
(73) Patentinhaber: ebm-papst Mulfingen GmbH & Co. KG, 74673 Mulfingen (DE)
(72) Erfinder: BÜRKERT, Martin, 74677 Dörzbach-Hohebach (DE); LIPP, Helmut, 74677 Dörzbach-Hohebach (DE); SAUER, Thomas, 97980 Bad Mergentheim (DE); HAAS, Günter, 74673 Mulfingen (DE); HUMM, Markus, 74679 Weißbach (DE); WECKERT, Marco, 97980 Bad Mergentheim (DE)
(74) Vertreter: Staeger & Sperling Partnerschaftsgesellschaft mbB
(86) Internationale Anmeldenummer: PCT/EP2018/070132
(87) Internationale Veröffentlichungsnummer: WO 2019/020674

(56) Entgegenhaltungen:
- WO-A1-2013/107704
- DE-U1- 202016 104 114
- DE-U1- 202016 104 114
- DE-U1- 29 907 265
- DE-U1- 29 907 265

## Beschreibung

### Gebiet der Erfindung

Die Erfindung betrifft die Vergabe von Netzwerkadressen an Geräte, wie z. B. Ventilatoren während der Anlageninbetriebnahme und insbesondere beim Austausch von defekten Geräten in einer Anlage. Ferner betrifft die Erfindung eine Anlage ausgebildet als dynamisch adressierbares Master-Slave-System und ein Verfahren zum Adressieren der Slave-Einheiten in dieser Anlage.

Es gibt im Stand der Technik diverse Verfahren der Adressvergabe in einem Netzwerk, wie z. B. die manuelle IP-Adressvergabe bei Netzwerkgeräten (Computer, Drucker, etc.), die Seriennummer basierte Autoadressierung, eine Adressvergabe nach einem bestimmten Kabelplan oder eine Schieberegisteradressvergabe. Einen automatisierten Adressiervorgang schlägt z. B. die DE 103 36 301 A1 vor. Aus der EP 2 287 689 EP ist ein Busbasierendes Adressierverfahren von Slave-Einheiten bekannt.

Aus der DE 29907265 U1 ist ein Datenübertragungsgerät mit einer Konfigurationseinrichtung bekannt, bei der die Seriennummer automatisiert erhalten wird.

Zur Datenübertragung zwischen mehreren Teilnehmern in einem Anlagennetzwerk werden z. B. Bussysteme eingesetzt. Bussysteme verschiedenster Art sind seit langem bekannt. Die der vorliegenden Erfindung zugrunde liegenden Master/Slave Bussysteme besitzen meist die Eigenschaft, dass alle Slave-Einheiten eindeutige Netzwerkadressen haben müssen, um individuell angesprochen werden zu können. Mittels Bussystem können dadurch einzelne Slaves individuell und gezielt angesprochen werden, wobei darüber die Einstellungen der Slaves geändert oder Zustandsinformationen vom Slave abgefragt werden können. In einer Anlage, bei der Seriennummer basierende Geräte, wie Motoren, Ventilatoren oder andere Einheiten mit einer Seriennummer vorhanden sind, in der ein oder mehrere defekte Geräte auszutauschen sind, sollen die einzubauenden Ersatz-Geräte die logischen Adressen, der aus der Anlage entfernten Geräte identisch übernehmen, so dass das jeweils neue Gerät vom Netzwerk, wie das ursprüngliche Gerät erkannt wird und genau die gleiche logische Netzwerkadresse besitzt, die das vorher an dieser Anlagenposition befindliche Gerät besaß.

Dadurch ist eine Master-Einheit in der Lage, bei einer bestimmte Slave-Einheit, und demnach bei einer ausgetauschten Slave-Einheit, eine von dieser Slave-Einheit angesteuerte Systemkomponente zu betätigen, oder empfangene Meldungen einer solchen Slave-Einheit und damit einer ganz bestimmten Systemkomponente zuzuordnen. Um eine solche Funktionalität zu gewährleisten, benötigt die ausgetauschte Slave-Einheit zum einen eine Konventionell wird dies beispielsweise dadurch erreicht, dass bei der Initialisierung eines Bussystems eine Adressier- oder Orientierungsphase durchgeführt wird. In dieser Phase werden den Slave-Einheiten zum Beispiel in einer bestimmten Reihenfolge Systemadressen zugeteilt, oder der Master-Einheit wird Gelegenheit gegeben, nacheinander gespeicherte Gerätekennungen von einzelnen Slave-Einheiten an verschiedenen Positionen abzufragen. Bei einem Austausch defekter Geräte bietet diese Art der Adressvergabe aber keine Lösung, um das zuvor genannte Ziel zu erreichen, dass das jeweils neue Gerät mit einer geänderten Seriennummer vom Netzwerk, wie das ursprüngliche Gerät, das eine andere Seriennummer aufweist, erkannt wird und genau die gleiche logische Netzwerkadresse mit nun einer anderen Seriennummer verknüpft werden müsste, besitzt, die das vorher an dieser Anlagenposition befindliche Gerät besaß.

In der DE 10 2014 117 797.5 A1 wird ein Master-Slave-System vorgeschlagen, das so konfiguriert ist, dass am Eingang der nächsten Slave-Einheit ein vom Digitalausgang bereitgestelltes Signal (Signalwechsel) einer seriellen Signalfolge detektiert wird, um die Adresse der entsprechenden Slave-Einheit jeweils um den Wert "1" zu erhöhen, den Signalwechsel im Speicher zu hinterlegen und ein zum Inhalt des Speichers korrespondierendes Signal am Ausgang des Speichers auszugeben. Nachteilig bei diesem Adressierungsverfahren ist, dass zur Adressierung über Schieberregister ein Taktsignal vom Master erforderlich ist und so eine Verknüpfung zur Seriennummer nicht hergestellt werden kann. Ein ausgetauschtes Gerät erhält dann zwar die in der Serie der Slave-Einheiten definierte Adresse, ohne dass die Master-Einheit und zentrale Steuerung aber weiß, welches Gerät mit welcher konkreten Seriennummer eingebaut oder ausgetauscht wurde. Finden über die Zeit mehrere solcher Austauschmaßnahmen statt, so stimmen die Daten im System überhaupt nicht mehr mit den Seriennummern bei der Inbetriebnahme überein.

Aus der US 8 856 413 B2 ist ein anderes Verfahren bekennt, umfassend ein Interface-Bus, eine Freigabeschaltung mit einem Schalter und zwei Steueranschlüssen, die über die Freigabeschaltung verbunden sind. Das System ist so konfiguriert, dass die Adresszuordnung nur dann möglich ist, wenn das Bus-Interface-Steuersignal an einem der Anschlüsse anliegt und sofern zur Steuerung der Freisetzung der Signalschalter offen ist. Andernfalls sperrt die Freigabeschaltung die Slave-Einheit. Nachteilig ist bei diesem Verfahren, dass damit das zuvor geschilderte Problem des Gerätetauschs ebenfalls nicht gelöst werden kann.

Bei der WO 2013/107704 A1 ist vorgesehen, dass ein Server einem Feldgerät anhand eines Datensatzes, welcher Position und eindeutige Kennung umfasst, einen Bezeichner zuordnet und diesen für die Kommunikation verwendet.

Vor diesem Hintergrund ist es Aufgabe der vorliegenden Erfindung, vorbesagte Nachteile zumindest teilweise zu reduzieren und ein verbessertes Verfahren zum Adressieren von Slave-Einheiten in einem Anlagennetzwerk bereitzustellen.

Diese Aufgabe wird gelöst mit einem Verfahren mit den Merkmalen von Anspruch 1 und einer Vorrichtung mit den Merkmalen von Anspruch 11. Erfindungsgemäß wird demnach ein Verfahren zum Adressieren einer oder mehrerer ausgetauschter Slave-Einheiten in einem Master-Slave-System vorgesehen, umfassend eine Master-Einheit und eine Mehrzahl von Slave-Einheiten, wobei die Slave-Einheiten sowohl eine eindeutige Seriennummer als auch eine feste Netzwerkadresse aufweisen und mit der Master-Einheit über ein Datenkommunikations-System miteinander verbunden sind und wobei in einem Systemspeicher der Master-Einheit eine Datenzuordnungstabelle vorgesehen ist, in welcher die jeweiligen Netzwerkadressen der Slave-Einheiten den jeweiligen Seriennummer dieser Slave-Einheiten entsprechend ihrer Position im System entsprechend einer festgelegten Ordnung zugeordnet sind, mit den folgenden Schritten:
a. Erfassen der Seriennummern der auszutauschenden Slave-Einheiten;
b. Eingabe bzw. Übermittlung der Seriennummern der ausgetauschten Slave-Einheit in Erfassungsreihenfolge an die Master-Einheit;
c. Ersetzen der für die jeweiligen Positionen hinterlegten Seriennummer durch die für die neu installierte Slave-Einheit eingegebene Seriennummer und Zuordnung zur Netzwerkadresse für diese Position in der Datenzuordnungstabelle.

Im Rahmen der vorliegenden Erfindung ist unter "Austausch-Gerät", "ausgetauschtem Gerät" und "ausgetauschter Slave-Einheit" jeweils die Slave-Einheit zu verstehen, die als Ersatz für das defekte bzw. entfernte Gerät bzw. Slave-Einheit im System neu installiert wurde.

Hierbei kann die frühere Seriennummer durch die Seriennummer des ausgetauschten d. h. neu installierten Geräts in der Datenzuordnungstabelle ersetzt werden, indem diese überschrieben wird. Ergänzend oder alternativ kann aber auch die alte Seriennummer in einen Archivspeicher geschrieben werden, so dass man die Hardware-Änderungen der Slave-Einheiten über einen Erfassungszeitraum nachverfolgen kann.

In einer bevorzugten Ausgestaltung der Erfindung ist vorgesehen, dass die Seriennummern der ausgetauschten Slave-Einheiten mittels kameratechnischer Erfassung, vorzugsweise mittels fotografischer Erfassung der Typenschilder der jeweiligen Slave-Einheit erfolgt. Somit kann z. B. ein Servicetechniker defekte Ventilatoren in einer lufttechnischen Anlage ausbauen und die Typenschilder der neu eingebauten Ventilatoren (Slave-Einheiten) in der Nummerierungsreihenfolge fotografieren. Die Anlage war bezüglich der logischen Netzwerkadressen ursprünglich in einer geordneten Reihenfolge aufgebaut worden und soll es nach Behebung des Problems auch wieder sein.

Erfindungsgemäß ist mit Vorteil dazu vorgesehen, dass die Eingabe der Seriennummern in Form einer Seriennummernliste in der Reihenfolge der ausgetauschten Slave-Einheiten erfolgt. Aufgrund der gleichen Erfassungsreihenfolge ist auch die konkrete Reihenfolge der neuen Geräteseriennummern bekannt und deren Position ist ebenfalls bekannt, da diese der Position der ausgefallenen bzw. entfernten Geräte entspricht. Die erfassten neuen Seriennummern werden in der Erfassungsreihenfolge an die Steuerung der Anlage, vorzugsweise somit an die Master-Einheit übermittelt.

Die Eingabe im zuvor genannten Schritt b) kann mit Vorteil mittels einer Eingabemaske auch manuell erfolgen, z. B. durch eine Tastatureingabe.

Die Übermittlung an die Master- Einheit kann erfindungsgemäß auf unterschiedliche Weise erfolgen. Die Eingabe und/oder Übertragung in Schritt b) kann automatisch mittels einer kabelgebundenen Datenübertragung der Seriennummern an die Master-Einheit erfolgen. So kann in einer vorteilhaften Ausgestaltung eine Schnittstelle dafür vorgesehen sein, wie z. B eine USB, Ethernet, RS485 oder andere geeignete System-Schnittstelle über die die Eingabe der Seriennummern der ausgetauschten Slave-Einheit in Erfassungsreihenfolge erfolgt.

Alternativ kann auch vorgesehen sein, dass die Eingabe in Schritt b) automatisch mittels einer drahtlosen Datenübertragung, vorzugsweise einer funkbasierenden, akustischen oder optischen Übertragung der Seriennummern an die Master-Einheit erfolgt. Hierzu kann mit Vorteil vorgesehen sein, dass die Seriennummer der jeweiligen betroffenen Slave-Einheit für den Fall einer Funkübertragung an die Master-Einheit auf einem RFID-Chip gespeichert ist, welcher vorzugsweise direkt an oder innerhalb eines zur Funkübertragung geeignet ausgebildeten Gehäuses der jeweils ausgetauschten Slave-Einheit angeordnet ist.

Alternativ zum Abfotografieren oder kameratechnischen Erfassen des Typenschilds und einer optischen Auswertung kann in einer anderen Ausgestaltung der Erfindung daher vorgesehen sein, dass die nötige Information auch in einem RFID-Chip im Gerät gespeichert ist, wobei sich hier der Klemmkastendeckel bevorzugt anbietet, der allerdings fest bei dem Gerät verbleiben muss.

Abhängig vom Gehäusematerial muss man noch für eine funktionierende Datenübertragung sorgen. Bei einem Kunststoffdeckel kann dieser beim Auslesen montiert bleiben, bei einem Metalldeckel muss dieser zunächst demontiert werden, damit der funktechnische Zugang zum RFID-Tag nicht durch die Schirmwirkung des Metalldeckels gestört wird. Das Auslesen kann mit einem mobilen RFID-fähigen Gerät, wie z. B. mit einem geeigneten Smartphone mit APP erfolgen. In einer alternativen Ausführungsform der Erfindung kann der RFID-Tag auch im Typenschild fest integriert sein.

Für die Adressvergabe ist dabei noch berücksichtigen, dass jede Slave-Einheit, welches in das Netzwerk zu integrieren ist, einen individuellen Zugangsschlüssel benötigt, der gemäß einer vorteilhaften Ausgestaltung der Erfindung, direkt von seiner Seriennummer abgeleitet ist und daher von der fotografierten, per RFID- erfassten oder anderweitig erfassten Seriennummer ermittelt werden kann. Hierzu wird erfindungsgemäß vorgeschlagen, dass jede Slave-Einheit einen aus der Seriennummer abgeleiteten Netzzugangsschlüssel besitzt.

In einer ebenfalls bevorzugten Ausführungsform der Erfindung ist vorgesehen, dass die Master-Einheit der jeweils ersetzten (ausgetauschten) Slave-Einheit die in der Datenzuordnungstabelle korrespondierende Netzwerkadresse zuweist und vorzugsweise über diese mit der entsprechenden Slave-Einheit kommuniziert.

Ein weiterer Aspekt der vorliegenden Erfindung betrifft neben dem Verfahren auch ein Master-Slave-System umfassend eine Master-Einheit und eine Mehrzahl von Slave-Einheiten, wobei jede Slave-Einheit sowohl eine eindeutige Seriennummer und eine feste Netzwerkadressen aufweist und mit der Master-Einheit über ein Datenkommunikations-System miteinander verbunden ist und wobei in einem Systemspeicher der Master-Einheit eine Datenzuordnungstabelle vorgesehen ist, in welcher die jeweiligen Netzwerkadressen der Slave-Einheiten den jeweiligen Seriennummer dieser Slave-Einheiten entsprechend ihrer Position im System gemäß einer festgelegten Ordnung zugeordnet sind, wobei ferner Eingabemittel zur Eingabe eine Seriennummer ausgetauschter Slave-Einheiten oder einer Liste solcher Seriennummern vorgesehen sind und ein Datenaustauschmodul zum manuellen oder automatischen Ersetzen der über das Eingabemittel hinterlegten Seriennummern für die ausgetauschten Slave-Einheiten und zur Zuordnung zur Netzwerkadresse für diese Position in der Datenzuordnungstabelle.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine schematische Darstellung eines beispielhaften Ausführungsbeispiels eines Master-Slave-Systems in einem Zustand nach der Inbetriebnahme;
- Fig. 2: eine schematische Darstellung des Master-Slave-Systems gemäß Figur 1 bei dem die Slave-Einheiten (S2 und S7) ausgefallen sind;
- Fig. 3: eine schematische Darstellung des Master-Slave-Systems gemäß den Figuren 1 und 2 bei dem die ausgefallenen Slave-Einheiten (S2 und S7) ausgebaut wurden und
- Fig. 4: eine schematische Darstellung des Master-Slave-Systems bei dem die ausgefallenen Slave-Einheiten (S2 und S7) durch neue (ausgetauschte) Slave-Einheiten ersetzt wurden.

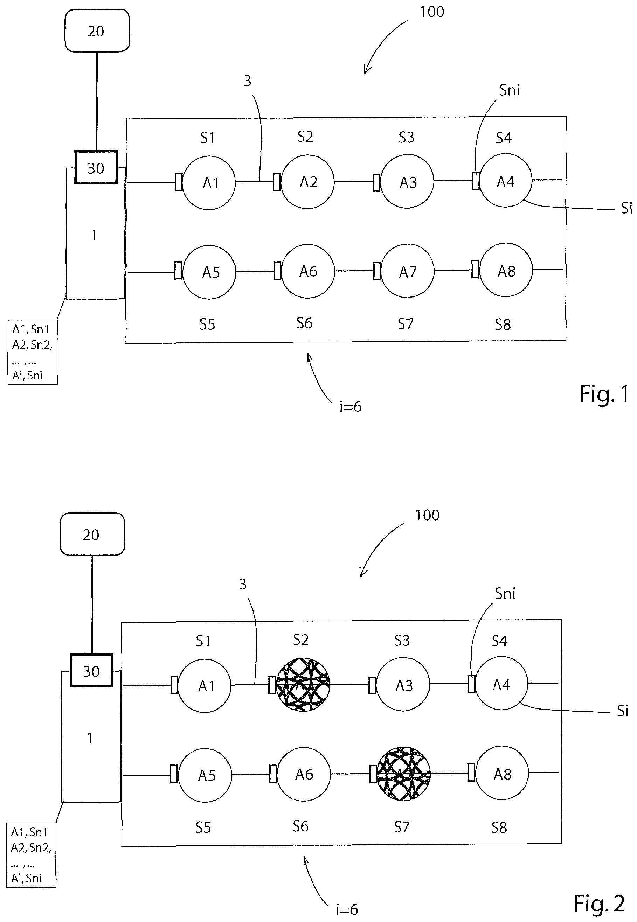

Im Folgenden wird die Erfindung anhand eines exemplarischen Ausführungsbeispiels mit Bezug auf die Figuren 1 bis 4 näher beschrieben, wobei gleiche Bezugszeichen auf gleiche funktionale und/oder strukturelle Merkmale hinweisen.

In der Figur 1 ist eine schematische Darstellung einer beispielhaften Ausführungsform eines Master-Slave-Systems 100 gezeigt. Das Master-Slave-System 100 umfasst eine Master-Einheit 1 (zentrale Steuerung) und Slave-Einheiten Si, wobei in diesem Ausführungsbeispiel mit i=8, acht beispielhafte Ventilatoren als Slave-Einheiten S1,..., S8 vorhanden sind.

Jede Slave-Einheiten Si besitzt sowohl eine eindeutige Seriennummer Sni und eine feste Netzwerkadressen Ai, hier im Beispiel mit den Netzwerkadressen A1,..., A8 bezeichnet. Die Slave-Einheiten Si sind mit der Master-Einheit 1 über ein Datenkommunikations-System 3 miteinander verbunden.

Ferner ist in einem Systemspeicher der Master-Einheit 1 eine Datenzuordnungstabelle (A1, Sn1), (A2, Sn2), ... , (Ai, Sni) vorgesehen, in welcher die jeweiligen Netzwerkadressen Ai der Slave-Einheiten Si den jeweiligen Seriennummer Sni dieser Slave-Einheiten Si entsprechend ihrer Position gemäß einer festgelegten Ordnung im System zugeordnet sind.

Weiter sind Eingabemittel 20 zur Eingabe der Seriennummern Sni für die beiden einzubauenden Ventilatoren S2 und S7 vorhanden. In der Figur 2 sind exemplarisch zwei Austausch-Ventilatoren gezeigt, die ebenfalls mit den Bezugszeichen S2 und S7 bezeichnet sind, da diese in der gleichen Reihenfolge in das System integriert werden sollen und die Netzwerkadressen der vorherigen Ventilatoren erhalten sollen.

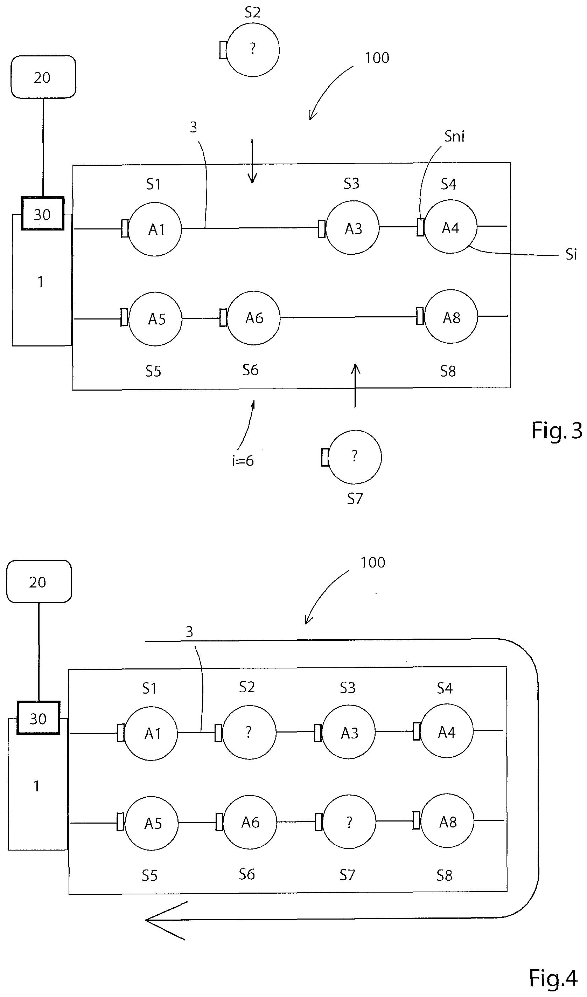

Die beiden Austausch-Ventilatoren S2 und S7 stellen in diesem Zustand Slave-Einheiten dar, die noch keine Netzwerkadresse besitzen. In der Fig. 3 ist eine schematische Darstellung des Master-Slave-Systems 100 gemäß den Figuren 1 und 2 gezeigt, bei dem die ausgefallenen Slave-Einheiten S2 und S7 ausgebaut wurden und in der Fig. 4 findet sich eine schematische Darstellung des Master-Slave-Systems 100 bei dem die ausgefallenen Slave-Einheiten durch neue (ausgetauschte) Slave-Einheiten S2 und S7 ersetzt wurden und gemäß der Erfassungsreihenfolge der Seriennummern eine eindeutige Position im System erhalten und damit über die Erfassungsreihenfolge in der Datenzuordnungstabelle auch die entsprechende Netzwerkadresse zugewiesen werden kann. Ferner sind Eingabemittel 20 zur Eingabe der Seriennummern Sni vorgesehen und ein Datenaustauschmodul 30, zum manuellen oder automatischen Ersetzen der über das Eingabemittel hinterlegten Seriennummer Sni.

Erfindungsgemäß ist eine Anzahl von Varianten denkbar, welche von der dargestellten Lösung auch bei grundsätzlich anders gearteten Ausführungen Gebrauch macht. So kann z. B. die Art der Erfassung der Seriennummern Sni der ausgetauschten Slave-Einheiten auf andere geeignete Art erfolgen, insbesondere über RFID-Tags oder über andere elektronische Speichermedien, die über eine Schnittstelle zu dem Master 1 übertragen werden können.

## Patentansprüche

1. Verfahren zum Adressieren zweier oder mehrerer ausgetauschter Slave-Einheiten (S1, ..., Si) in einem Master-Slave-System (100) umfassend eine Master-Einheit (1) und eine Mehrzahl von Slave-Einheiten (Si), wobei die Slave-Einheiten (Si) sowohl eine eindeutige Seriennummer (Sni) und eine feste Netzwerkadresse (Ai) aufweisen und mit der Master-Einheit (1) über ein Datenkommunikations-System (3) miteinander verbunden sind und wobei in einem Systemspeicher der Master-Einheit (1) eine Datenzuordnungstabelle ((A1, Sn1), (A2, Sn2), ... , (Ai, Sni)) vorgesehen ist, in welcher die jeweiligen Netzwerkadressen (Ai) der Slave-Einheiten (Si) den jeweiligen Seriennummer (Sni) dieser Slave-Einheiten (Si) entsprechend ihrer Position (i) in einer festgelegten Ordnung im System zugeordnet sind, mit den folgenden Schritten:
a. Erfassen der Seriennummern (Sni) der auszutauschenden Slave-Einheiten (Si);
b. Eingabe der Seriennummern (Sni) der ausgetauschten Slave-Einheit (Si) in Erfassungsreihenfolge an die Master-Einheit (1);
c. Ersetzen der für die Position (i) hinterlegten Seriennummer (Sni) für die Slave-Einheit (Si) durch die eingegebene Seriennummer (Sni) und Zuordnung zur Netzwerkadresse (Ai) für diese Position in der Datenzuordnungstabelle ((A1, Sn1), (A2, Sn2), ... , (Ai, Sni)).

2. Verfahren nach Anspruch 1, **dadurch gekennzeichnet, dass** die Seriennummern (Sni) der auszutauschenden Slave-Einheiten (Si) mittels optischer Erfassung, vorzugsweise mittels fotografischer Erfassung der Seriennummer von einem Typenschild der jeweiligen Slave-Einheit (Si) erfolgt.

3. Verfahren nach Anspruch 1 oder 2, **dadurch gekennzeichnet, dass** die Eingabe der Seriennummern (Sni) in Form einer Seriennummernliste der auszutauschenden Slave-Einheiten (Si) in der Reihenfolge der ausgetauschten Slave-Einheiten (Si) erfolgt.

4. Verfahren nach einem der Ansprüche 1 bis 3, **dadurch gekennzeichnet, dass** die Eingabe in Schritt b) mittels einer Eingabemaske manuell erfolgt.

5. Verfahren nach einem der Ansprüche 1 bis 3, **dadurch gekennzeichnet, dass** die Eingabe in Schritt b) automatisch mittels einer kabelgebundenen Datenübertragung der Seriennummern (Sni) an die Master-Einheit (1) erfolgt.

6. Verfahren nach Anspruch 5, **dadurch gekennzeichnet, dass** die Eingabe in Schritt b) über eine Schnittstelle, wie eine USB, Ethernet, RS485 oder andere Schnittstelle erfolgt.

7. Verfahren nach einem der Ansprüche 1 bis 3, **dadurch gekennzeichnet, dass** die Eingabe in Schritt b) automatisch mittels einer drahtlosen Datenübertragung, vorzugsweise einer funkbasierenden, akustischen oder optischen Übertragung der Seriennummern (Sni) an die Master-Einheit (1) erfolgt.

8. Verfahren nach Anspruch 7, **dadurch gekennzeichnet, dass** die Seriennummer (Sni) der Slave-Einheit (Si) für den Fall einer Funkübertragung an die Master-Einheit (1) auf einem RFID-Chip gespeichert ist, welcher vorzugsweise direkt an oder innerhalb eines zur Funkübertragung geeignet ausgebildeten Gehäuses der jeweils ausgetauschten Slave-Einheit (Si) angeordnet ist.

9. Verfahren nach Anspruch 8, **dadurch gekennzeichnet, dass** jede Slave-Einheit (Si) einen aus der Seriennummer (Sni) abgeleiteten Netzzugangsschlüssel besitzt.

10. Verfahren nach einem der vorhergehenden Ansprüche, **dadurch gekennzeichnet, dass** die Master-Einheit (1) der ersetzten Slave-Einheit (Si) die aus der Datenzuordnungstabelle ((A1, Sn1), (A2, Sn2), ..., (Ai, Sni)) korrespondierende Netzwerkadresse (Ai) zuweist und vorzugsweise über diese mit der entsprechenden Slave-Einheit (Si) kommuniziert.

11. Master-Slave-System (100) umfassend eine Master-Einheit (1) und eine Mehrzahl von Slave-Einheiten (Si), wobei jede Slave-Einheiten (Si) sowohl eine eindeutige Seriennummer (Si) und eine feste Netzwerkadressen (Ai) aufweisen und mit der Master-Einheit (1) über ein Datenkommunikations-System (3) miteinander verbunden sind und wobei in einem Systemspeicher der Master-Einheit (1) eine Datenzuordnungstabelle ((A1, Sn1), (A2, Sn2), ... , (Ai, Sni)) vorgesehen ist, in welcher die jeweiligen Netzwerkadressen (Ai) der Slave-Einheiten (Si) den jeweiligen Seriennummer (Sni) dieser Slave-Einheiten (Si) entsprechend ihrer Position (i) einer festgelegten Ordnung im System zugeordnet sind, wobei ferner Eingabemittel (20) zur Eingabe in Erfassungsreihenfolge einer Liste an zwei oder mehreren Seriennummern (Sni) in dem System ausgetauschter Slave-Einheiten (Si) vorgesehen sind und ein Datenaustauschmodul zum manuellen oder automatischen Ersetzen der über das Eingabemittel hinterlegten Seriennummer (Sni) für die ausgetauschten Slave-Einheiten (Si) und zur Zuordnung zur Netzwerkadresse (Ai) für diese Position in der Datenzuordnungstabelle ((A1, Sn1), (A2, Sn2), ... , (Ai, Sni)).

## Claims

1. Method for addressing two or more replaced slave units (S1, ..., Si) in a master-slave system (100) comprising a master unit (1) and a plurality of slave units (Si), wherein the slave units (Si) have both a unique serial number (Sni) and a fixed network address (Ai) and are interconnected with the master unit (1) via a data communication system (3) and wherein a data assignment table ((A1, Sn1), (A2, Sn2), ... , (Ai, Sni)) is provided in a system memory of the master unit (1), in which table the respective network addresses (Ai) of the slave units (Si) are assigned to the respective serial numbers (Sni) of these slave units (Si) according to the position (i) thereof in a determined order in the system, said method having the following steps:
a. acquiring the serial numbers (Sni) of the slave units (Si) to be replaced;
b. inputting the serial numbers (Sni) of the replaced slave unit (Si) in acquisition sequence at the master unit (1);
c. replacing the serial number (Sni) for the slave unit (Si), stored for the position (i), with the input serial number (Sni) and assigning it to the network address (Ai) for this position in the data assignment table ((A1, Sn1), (A2, Sn2), ... , (Ai, Sni)).

2. Method according to Claim 1, **characterized in that** the serial numbers (Sni) of the slave units (Si) to be replaced are produced by means of optical acquisition, preferably by means of photographic acquisition of the serial number of a nameplate of the respective slave unit (Si).

3. Method according to Claim 1 or 2, **characterized in that** the input of the serial numbers (Sni) is performed in the form of a serial number list of the slave units (Si) to be replaced in the sequence of the replaced slave units (Si).

4. Method according to any one of Claims 1 to 3, **characterized in that** the input in step b) is performed manually by means of an input mask.

5. Method according to any one of Claims 1 to 3, **characterized in that** the input in step b) is performed automatically by means of a wired data transmission of the serial numbers (Sni) to the master unit (1).

6. Method according to Claim 5, **characterized in that** the input in step b) is performed via an interface, such as a USB, ethernet, RS485, or another interface.

7. Method according to any one of Claims 1 to 3, **characterized in that** the input in step b) is performed automatically by means of a wireless data transmission, preferably a radio-based, acoustic, or optical transmission of the serial numbers (Sni) to the master unit (1).

8. Method according to Claim 7, **characterized in that** the serial number (Sni) of the slave unit (Si) is stored for the case of a radio transmission to the master unit (1) on an RFID chip, which is preferably arranged directly on or inside a housing of the respective replaced slave unit (Si) that is suitably designed for the radio transmission.

9. Method according to Claim 8, **characterized in that** each slave unit (Si) has a network access key derived from the serial number (Sni).

10. Method according to any one of the preceding claims, **characterized in that** the master unit (1) assigns the replaced slave unit (Si) the corresponding network address (Ai) from the data assignment table ((A1, Sn1), (A2, Sn2), ..., (Ai, Sni)) and preferably communicates via this with the corresponding slave unit (Si).

11. Master-slave system (100) comprising a master unit (1) and a plurality of slave units (Si), wherein every slave unit (Si) has both a unique serial number (Si) and a fixed network address (Ai) and is interconnected with the master unit (1) via a data communication system (3) and wherein a data assignment table ((A1, Sn1), (A2, Sn2), ... , (Ai, Sni)) is provided in a system memory of the master unit (1), in which table the respective network addresses (Ai) of the slave units (Si) are assigned to the respective serial numbers (Sni) of these slave units (Si) according to the position (i) thereof in a determined order in the system, wherein furthermore, input means (20) for inputting in acquisition sequence a list of two or more serial numbers (Sni) of replaced slave units (Si) in the system and a data exchange module for manually or automatically replacing the serial number (Sni) stored via the input means for the replaced slave units (Si) and for assigning it to the network address (Ai) for this position in the data assignment table ((A1, Sn1), (A2, Sn2), ... , (Ai, Sni)) are provided.

## Revendications

1. Procédé d'adressage de deux ou plusieurs unités esclaves (S1, ... , Si) remplacées dans un système maître-esclave (100) comprenant une unité maître (1) et une pluralité d'unités esclaves (Si), dans lequel les unités esclaves (Si) présentent à la fois un numéro de série unique (Sni) et une adresse réseau fixe (Ai) et sont reliées entre elles avec l'unité maître (1) par l'intermédiaire d'un système de communication de données (3), et dans lequel il est prévu, dans une mémoire système de l'unité maître (1), une table d'attribution de données ((A1, Sn1), (A2, Sn2), ... , (Ai, Sni)) dans laquelle les adresses réseau (Ai) respectives des unités esclaves (Si) sont attribuées aux numéros de série (Sni) respectifs de ces unités esclaves (Si) conformément à leur position (i) dans un ordre déterminé dans le système, comprenant les étapes suivantes :
a. la détection des numéros de série (Sni) des unités esclaves (Si) à remplacer ;
b. la saisie des numéros de série (Sni) de l'unité esclave (Si) remplacée, dans l'ordre de détection, auprès de l'unité maître (1) ;
c. le remplacement du numéro de série (Sni) enregistré pour la position (i) pour l'unité esclave (Si) par le numéro de série (Sni) saisi, et l'attribution à l'adresse réseau (Ai) pour cette position dans la table d'attribution de données ((A1, Sn1), (A2, Sn2), ... , (Ai, Sni)).

2. Procédé selon la revendication 1, **caractérisé en ce que** la détection des numéros de série (Sni) des unités esclaves (Si) à remplacer s'effectue au moyen d'une détection optique, de préférence au moyen d'une détection photographique du numéro de série à partir d'une plaque signalétique de l'unité esclave (Si) respective.

3. Procédé selon la revendication 1 ou 2, **caractérisé en ce que** la saisie des numéros de série (Sni) s'effectue sous la forme d'une liste de numéros de série des unités esclaves (Si) à remplacer dans l'ordre des unités esclaves (Si) remplacées.

4. Procédé selon l'une quelconque des revendications 1 à 3, **caractérisé en ce que** la saisie à l'étape b) s'effectue manuellement au moyen d'un masque de saisie.

5. Procédé selon l'une quelconque des revendications 1 à 3, **caractérisé en ce que** la saisie à l'étape b) s'effectue automatiquement au moyen d'une transmission de données filaire des numéros de série (Sni) auprès de l'unité maître (1).

6. Procédé selon la revendication 5, **caractérisé en ce que** la saisie à l'étape b) s'effectue par l'intermédiaire d'une interface, telle qu'une interface USB, Ethernet, RS485 ou autre interface.

7. Procédé selon l'une quelconque des revendications 1 à 3, **caractérisé en ce que** la saisie à l'étape b) s'effectue automatiquement au moyen d'une transmission de données sans fil, de préférence une transmission radioélectrique, acoustique ou optique des numéros de série (Sni) auprès de l'unité maître (1).

8. Procédé selon la revendication 7, **caractérisé en ce que** le numéro de série (Sni) de l'unité esclave (Si) est stocké, dans le cas d'une transmission radioélectrique à l'unité maître (1), sur une puce RFID qui est disposée de préférence directement sur ou à l'intérieur d'un boîtier de l'unité esclave (Si) respective remplacée, ledit boîtier étant configuré de manière appropriée pour la transmission radioélectrique.

9. Procédé selon la revendication 8, **caractérisé en ce que** chaque unité esclave (Si) possède une clé d'accès au réseau dérivée du numéro de série (Sni).

10. Procédé selon l'une quelconque des revendications précédentes, **caractérisé en ce que** l'unité maître (1) attribue à l'unité esclave (Si) remplacée l'adresse réseau (Ai) correspondante issue de la table d'attribution de données ((A1, Sn1), (A2, Sn2), ... , (Ai, Sni)) et communique de préférence par l'intermédiaire de celle-ci avec l'unité esclave (Si) correspondante.

11. Système maître-esclave (100) comprenant une unité maître (1) et une pluralité d'unités esclaves (Si), dans lequel chaque unité esclave (Si) présente à la fois un numéro de série unique (Si) et une adresse réseau fixe (Ai) et est reliée avec l'unité maître (1) par l'intermédiaire d'un système de communication de données (3), et dans lequel il est prévu, dans une mémoire système de l'unité maître (1), une table d'attribution de données ((A1, Sn1), (A2, Sn2), ... , (Ai, Sni)) dans laquelle les adresses réseau (Ai) respectives des unités esclaves (Si) sont attribuées aux numéros de série (Sni) respectifs de ces unités esclaves (Si) conformément à leur position (i) dans un ordre déterminé dans le système, **caractérisé en ce qu'**il est en outre prévu des moyens de saisie (20) pour la saisie, dans l'ordre de détection, d'une liste de deux ou plusieurs numéros de série (Sni) d'unités esclaves (Si) remplacées dans le système, et un module d'échange de données pour le remplacement manuel ou automatique du numéro de série (Sni) enregistré par l'intermédiaire des moyens de saisie pour les unités esclaves (Si) remplacées, et pour l'attribution à l'adresse réseau (Ai) pour cette position dans la table d'attribution de données ((A1, Sn1), (A2, Sn2), ... , (Ai, Sni)).
